# EUROPÄISCHE PATENTSCHRIFT

(11) **EP 1 036 711 B1**
(45) Veröffentlichungstag und Bekanntmachung des Hinweises auf die Patenterteilung: **02.01.2004**
(21) Anmeldenummer: 00104440.3
(22) Anmeldetag: 06.03.2000
(51) Int. Cl.: B60R 16/02

(54) **Wanddurchführung für strangförmige Körper**
Wall feed-through for cord-like body
Traversée de paroi pour corps sous forme de toron

(30) Priorität: 16.03.1999 DE 19911649
(43) Veröffentlichungstag der Anmeldung: 20.09.2000
(73) Patentinhaber: Volkswagen Aktiengesellschaft, 38436 Wolfsburg (DE)
(72) Erfinder: Neumüller, Helmut, 38557 Osloss (DE)

(56) Entgegenhaltungen:
- EP-A- 0 882 922
- FR-A- 2 730 785
- GB-A- 2 149 469
- US-A- 4 912 287

## Beschreibung

Die Erfindung betrifft eine Wanddurchführung für strangförmige Körper, wie Kabel, Leitungen, Rohre oder dgl., insbesondere eine Durchführung für Kraftfahrzeugkabel und -leitungen.

Im Kraftfahrzeugbau besteht die Notwendigkeit, eine Vielzahl von elektrischen Verbrauchern, Bedienungs- und Steuerelementen sowie Instrumente und Sensoren miteinander elektrisch zu verbinden. Hierzu werden Kabel und Leitungen benötigt, die an autarken Fahrzeugbauteilen aus- und eintreten. Für den Aus- und Eintritt der Kabel und Leitungen sind Wanddurchführungen vorgesehen; beispielsweise der Schutz eines aus einer Fahrzeugtür herausgeführten Kabelstranges, welcher an innerhalb einer Karosseriesäule sitzenden elektrischen Verbindunqsgliedem angeschlossen ist.

Ebenso ist die Durchführung von Kabel und Leitungen vom Fahrzeuginnenraum in den Motorraum problematisch, da im Motorraum Spritzwasser auftritt und dieses von der Durchführung ferngehalten werden muß. Dazu wird eine schlauchförmige Schutzhülle im Wanddurchführungsbereich über den Kabelstrang gezogen und in die Öffnung am Karosserieteil eingeknüpft. Diese Schutzhülle wird auch als sogenannte Kabeltülle bezeichnet. Die Kabeltülle muß so gestaltet und bemessen sein, daß nicht Wasser innerhalb der Kabeltülle, eingeschlossen der Kabelstrang, durch Kapillarwirkung aufsteigt. In der Regel wird die Kabeltülle mit Kabelstrang bogenförmig nach unten abgeknickt und die Länge der Tülle ist so groß, daß für das eindringende Wasser eine unüberwindbare Steighöhe entsteht.

Es ist bekannt, die in den Spritzwasserbereich geführten Kabel und Leitungen so bogenförmig nach unten abzubiegen, daß zum Zweck der Vergrößerung der Steighöhe im unmittelbaren Bereich der Trennwand zwischen Fahrzeuginnenraum und Motorraum zunächst ein Anstieg des Bogens erfolgt, der erst dann nach unten abfällt. Insbesondere der von der Trennwand aus gesehene ansteigende Bereich des Bogens ist mit PVC-Bändem umwickelt und zur Längswasserdichtigkeit sind die Zwischenräume der Kabel und Leitungen mit Kleber ausgefüllt. Diese längswasserdichte Ausführung ist jedoch nur für kleinere Durchmesser des Kabelstranges vorteilhaft; das gesamte Gebilde ist steif und zusätzliche nachzurüstende Leitungen sind in diesen Verband nicht mehr integrierbar.

Die DE 44 36 778 A1 beschreibt eine einteilige Leitungsdurchführung, bestehend aus einem flexiblen Faltenbalg, der auf der einen Seite in eine Wandöffnung eingesetzt ist und auf der anderen Seite in einen als schlauchförmigen Hohlkanal ausgebildeten glatten Abschnitt übergeht. An der Außenseite des Hohlkanals ist eine Verschließeinrichtung angebracht, die aus einem mit Rasten versehenen Band und einer Lasche besteht, wobei in der Art eines Kabelbinders das Band den Hohlkanal umschließt und durch die Lasche geführt ist und einrastet. Damit wird der Austrittsbereich der Leitungen im Bereich des Hohlkanals durch Einschnürung verschlossen. Der Einsatz des Faltenbalges in die Wandöffnung eines Karosseriebleches erfolgt durch Hintergreifen der Kante des Faltenbalges. Ein Herausziehen der Kante des Faltenbalges bei Zug- und Biegebeanspruchung ist möglich.

Aus der DE 8519971 U1 ist eine einteilige Durchführungstülle für einen Kabelbaum bekannt, bei dem am Tüllenteil ein Flansch angesetzt ist und die Tülle aus wärmeschrumpfbarem Material besteht. Die Durchführungstülle wird durch die Öffnung geschoben und mit einem Flansch an der Innenseite der Wandung angelegt. Ein am Flansch vorhandenes Ringteil wird anschließend unter Wärmeeinwirkung aufgerichtet und an der Außenseite der Wandung zum Anschlag gebracht. Die Innenseite der Tülle sowie die der Wandung zugekehrte Seite des Flansches sind mit Klebschichten bedeckt. Die Abdichtung erfolgt durch Aufschrumpfen der Tülle mittels Wärme auf den Kabelstrang. Die Flanschbefestigung durch Aufrichten eines Ringteiles ist aufwendig. Ein Nachrüsten von Leitungen ist durch den Schrumpfprozeß nicht mehr möglich.

EP 0 603 741 B1 beschreibt eine einteilige elastische Kabeltülle, welche zur Durchführung einer Innen- und Außenwand geeignet ist, über in die Wandöffnungen einknöpfbare wulstförmige Halteelemente verfügt und die Halteelemente Ober ein elastisches Schlauchstück miteinander verbunden sind. An dem Halteelement der Außenseite ist ein elastisches Hüllrohr zur Aufnahme des Kabelstranges angesetzt. Der Kabelstrang ist durch die Halteelemente, das elastische Schlauchstück sowie das Hüllrohr geführt. Zur Abdichtung des Raumes hinter der Innenwand besitzt das entsprechende Halteelement an der Stimseite konzentrisch einen sich im Querschnitt verjüngenden Innenkörper zum Anlegen an den durchgeführten Kabelstrang in der Funktion einer Dichtlippe.

Radial angeordnete Rippen zwischen dem Innenkörper und dem wulstförmigen in der Innenwand eingeknöpften Halteelement verstärken die Abdichtung.

Das Einsetzen der Halteelemente durch Hintergreifen mittels Wulst und Nut in eine Innen- und Außenwand bedarf einer großen Geschicklichkeit.

Aus der DE 42 13 727 C1 ist eine einteilige Dichtungshülle bekannt, die über ihren vollem Umfang dichtend an der Wand anliegt, eine Einschnapp-Dichtlippe die Wandöffnung hinter-greift und zusätzlich vor dem Herausgleiten durch einen U-förmigen, an der durchgesteckten Dichtlippe angesetzten Bügel gesichert ist. Ein sicherer Halt ist nur über einen zusätzlichen Bügel möglich.

Die DE 35 00 359 C1 und DE 41 09 804 C1 beschreiben Leitungsdurchführungen zur Schaffung eines Verbindungskanals zwischen einer Kraftwagensäule und der Stimseite einer über Scharniere angesetzten Kraftwagentür. Hierzu wird ein Faltenbalg beidseitig in die kragenartigen Stirnseiten eingehängt. Keilförmige Rastzungen, die durch die Öffnung geschoben sind und die Wand hintergreifen und arretiert sind, erreichen eine zusätzliche Fixierung des Faltenbalges.

Allen Ausführungen mit elastischen Durchführungen, die über lippenartige Formen ein Hintergreifen der Wand bzw. ein Einhängen über einen Kragen realisieren, ist gemeinsam, daß ein Fixieren der Durchführungen bzw. der Kabeltüllen in der Wandöffnung nur durch die Eigenelastizität des Materials möglich ist. Eine sichere Befestigung erfordert aufwendige Maßnahmen, wie Herstellen eines Doppelflansches oder Einsatz eines Befestigungsbügels. Darüber hinaus sind die Wanddurchführungen oder Kabeltüllen einteilig ausgeführt, so daß sie nur in spezielle dafür ausgelegte Wandöffnungen passen. Beim Nachrüsten von Kabel und Leitungen ist die gesamte Durchführung aus der Öffnung zu lösen.

Eine Wanddurchführung gemäß dem Oberbegriff des Anspruchs 1 ist aus DE-C-4109804 bekannt.

Der Erfindung liegt die Aufgabe zugrunde; eine Wanddurchführung für strangförmige Körper zu schaffen, die mehrteilig ausgeführt, leicht demontierbar ist und sicher in der Wandöffnung fixiert ist.

Die Aufgabe wird erfindungsgemäß bei einer gattungsgemäßen Wanddurchführung mit den kennzeichnenden Merkmalen des Patentanspruches 1 gelöst. Aus- und Weiterentwicklungen der Erfindung sind in den Unteransprüchen niedergelegt.

Die Erfindung besteht in einer Kombination von einem formstabilen und einem elastischen Teil. Dabei übernimmt das formstabile Teil als Einsatz und Durchführung in der Karosseriewand die sichere Befestigung. Durch den an der Karosseriewand aufsitzenden Flansch ist ein Herausziehen des starren Trägers nicht möglich. Der elastische Teil in Form eines Faltenbalges übernimmt nicht nur die Aufgabe des Spritzwasserschutzes, sondern ebenso läßt sich leicht der Tüllenbogen gestalten sowie ein Längenausgleich ist realisierbar. Die Verbindung der Teile über einen Clipsring ist einfach und sicher. Problemlos lassen sich die Teile voneinander trennen, was besonders beim Nachrüsten von strangförmigen Körpern, wie Kabel und Leitungen oder Rohren vorteilhaft ist. Die beispielsweise nachzurüstende Leitung muß nicht durch die gesamte Durchführung gefädelt werden, sondern ein etappenweises Arbeiten ist montagefreundlich. Die Einzelteile der Wanddurchführung sind kombinierfähig und für verschiedene Typen der Wanddurchführung austauschbar. Eine Beschränkung nur auf eine bestimmte Wandöffnung ist nicht vorhanden, sondern die erfindungsgemäße Wanddurchführung ist universell einsetzbar.
Der Clipsring besteht aus einem Material mit einer definierten Elastizität, welche ausreicht, um den Clipsring über das buchsenförmige Durchführungsteil zu schieben bis die Nase des Clipsringes in die Nut des Durchführungsteils einrastet.

Die Erfindung wird nachfolgend an einem Ausführungsbeispiel näher erläutert.

Die zugehörige Zeichnung zeigt eine schematische Darstellung der Wanddurchführung im Querschnitt.

Die Wanddurchführung besteht aus dem starren Träger 1, dem Faltenbalg 2 sowie dem Clipsring 3. Nachdem der hier nicht dargestellte Kabelstrang durch den Träger 1 und den elastischen Faltenbalg 2 geschoben ist, erhält der Träger 1 seine Montagestellung.

Das buchsenförmige Durchführungsteil 4 ist durch die Öffnung der Karosseriewand 6 geführt und der Flansch 5 des Trägers 1 schlägt an die Karosseriewand 6.

Der Faltenbalg 2 besitzt einen Kragen 7, der formschlüssig in die Nut 8 der Stimseite des Durchführungsteiles 4 eingesetzt ist. Der Clipsring 3 ist über das Durchführungsteil 4 geschoben, so daß Nase 14 des Clipsringes in die Nut 9 des Durchführungsteiles einrastet. Das Überwurfteil 10 fixiert mit der sägezahnähnlichen Kante 11 den Kragen 7 in der Nut 8. Eine Dichtschaumraupe 12 an der Wanddurchführung verhindert das Eindringen von Wasser in den Raum hinter dem Karosserieblech. Der Faltenbalg 2 hat an der Kragenseite Taschen 13, die das Nachrüsten von Leitungen besonders einfach gestalten.

Die dargestellte Wanddurchführung eignet sich in besonderer Weise für das Herausführen von einem Kabelstrang aus dem Fahrzeuginnenraum in den Motorraum. Dabei bildet das Karosserieblech 6 die sogenannte Spritzwand. Der Kabelstrang wird vorteilhafterweise über einen Schlitz in der Spritzwand zur Durchführungsöffnung geführt, wodurch Fädelarbeiten entfallen. Der Schlitz ist fahrgastraumseitig durch eine Montageplatte für das Cockpitmodul und eine entsprechende Dichtschaumraupe abgedichtet. Die weitere Dichtfunktion übernimmt der Flansch 5 des Trägers 1 sowie die gesamte erfindungsgemäße Wanddurchführung. Der Faltenbalg 2, auch als Kabeltülle bezeichnet, wird mittels einer Kabelschelle zunächst von der Spritzwand aus gesehen ansteigend geführt und dann erst erfolgt die Abknickung, um einen großen Kriechweg für das Spritzwasser zu erreichen.

### BEZUGSZEICHENLISTE

- 1: Träger
- 2: Faltenbalg
- 3: Clipsring
- 4: Durchführungsteil
- 5: Flansch
- 6: Karosseriewand
- 7: Kragen
- 8: Nut
- 9: Nut
- 10: Überwurfteil
- 11: sägezahnähnliche Kante
- 12: Dichtschaumraupe
- 13: Taschen
- 14: Nase

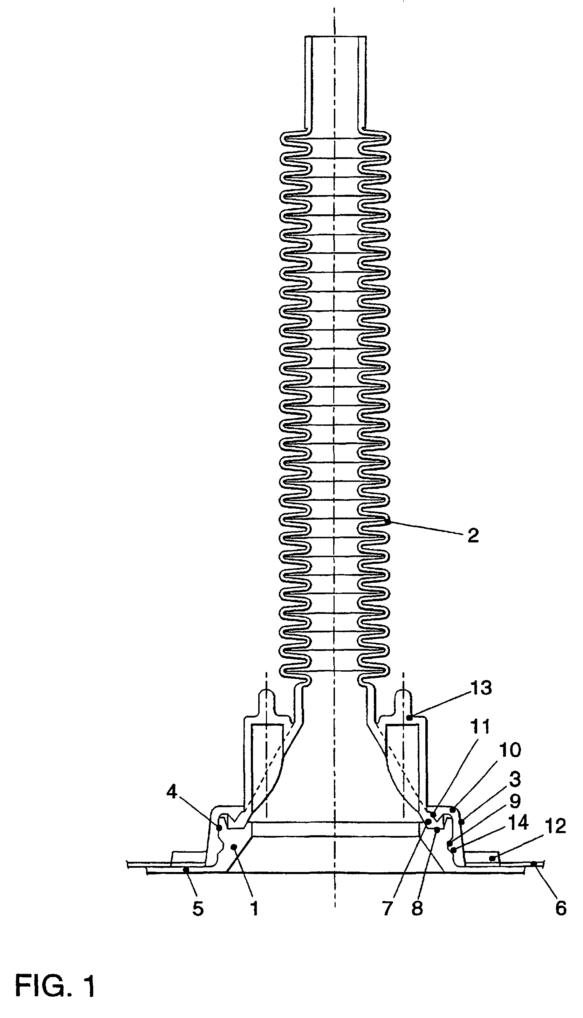

## Patentansprüche

1. Wanddurchführung für strangförmige Körper, wie Kabel Leitungen, Rohre oder dgl. bestehend aus einem in die Wandöffnung einsetzbaren Träger (1) mit einer Durchtrittsöffnung für strangförmige Körper, wobei der Träger (1) kreisringförmig ist und mit einem Flansch (5) an einer Seite einer Karosseriewand (6) anlegbar ist und ein am Flansch (5) koaxial angesetztes buchsenförmiges Durchführungsteil (4) durch die Wandöffnung der Karosseriewand (6) führbar ist und in eine Ausnehmung (8) am Durchführungsteil (4) der stimseitige Kragen (7) eines elastischen Faltenbalges (2) eingesetzt ist, **dadurch gekennzeichnet, daß** der starr ausgebildete Träger (1) sowie der Faltenbalg (2) mittels eines im Querschnitt rechtwinkligen Clipsringes (3) miteinander verbunden sind, wobei der Clipsring (3) über das buchsenförmige Durchführungsteil (4) geschoben und formschlüssig befestigt ist und andererseits mit einem Überwurfteil (10) den am Durchführungsteil eingesetzten Kragen (7) des Faltenbalges umgreift, und wobei die Ausnehmung von einer am Durchführungsteil (4) stimseitig angeformten Nut (8) gebildet ist.

2. Wanddurchführung nach Anspruch 1, **dadurch gekennzeichnet, daß** eine an der Innenseite des Clipsringes (3) angeordnete Nase (14) in eine äußere Nut (9) des Durchführungsteiles (4) eingreift.

3. Wanddurchführung nach einem der Ansprüche 1 und 2, **dadurch gekennzeichnet, daß** eine sägezahnähnliche Kante (11) am Überwurfteil (10) des Clipsringes (3) in den Kragen (7) des Faltenbalges (2) formschlüssig eingreift.

4. Wanddurchführung nach einem der Ansprüche 1 - 3, **dadurch gekennzeichnet, daß** der Kragen (7) des Faltenbalges (2) formschlüssig in die Nut (8) des Durchführungsteiles (4) eingesetzt ist.

5. Wanddurchführung nach einem der Ansprüche 1 - 4, **dadurch gekennzeichnet, daß** die Wanddurchführung zwischen Clipsring (3), Träger (1) und Karosseriewand (6) mit einem Dichtungsmaterial (12) versehen ist.

6. Wanddurchführung nach Anspruch 5, **dadurch gekennzeichnet, daß** das Dichtungsmaterial eine Dichtschaumraupe (12) darstellt.

7. Wanddurchführung nach einem der Ansprüche 1 - 6, **dadurch gekennzeichnet, daß** der Träger (1) aus glasfaserverstärktem Material besteht.

8. Wanddurchführung nach einem der Ansprüche 1 - 7, **dadurch gekennzeichnet, daß** der Clipsring (3) aus Polyethylen besteht.

9. Wanddurchführung nach einem der Ansprüche 1 - 8, **dadurch gekennzeichnet, daß** die Innenseite des Trägers (1) kegelstumpfförmig gestaltet ist und die Verjüngung zum Faltenbalg gerichtet ist.

## Claims

1. Wall leadthrough for cord-like bodies, such as cables, lines, pipes or the like, comprising a support (1) which can be inserted into the wall opening and has a passage opening for cord-like bodies, the support (1) being circular and being able to be placed with a flange (5) against a side of a body wall (6), and a bushing-like leadthrough part (4) fitted coaxially on the flange (5) being able to be guided through the wall opening in the body wall (6), and the end collar (7) of an elastic expansion bellows (2) being inserted into a recess (8) on the leadthrough part (4), **characterized in that** the support (1), which is of rigid design, and the expansion bellows (2) are connected to each other by means of a clip ring (3) which is right-angled in cross section, the clip ring (3) being pushed over the bushing-like leadthrough part (4) and being secured in an interlocking manner and on the other side engaging with a cap part (10) around the collar (7) of the expansion bellows inserted on the leadthrough part, and the recess being formed by a groove (8) integrally formed on the end side of the leadthrough part (4).

2. Wall leadthrough according to Claim 1, **characterized in that** a lug (14) arranged on the inside of the clip ring (3) engages in an outer groove (9) of the leadthrough part (4).

3. Wall leadthrough according to either of Claims 1 and 2, **characterized in that** a sawtooth-like edge (11) on the cap part (10) of the clip ring (3) engages in an interlocking manner in the collar (7) of the expansion bellows (2).

4. Wall leadthrough according to one of Claims 1-3, **characterized in that** the collar (7) of the expansion bellows (2) is inserted in an interlocking manner into the groove (8) of the leadthrough part (4).

5. Wall leadthrough according to one of Claims 1-4, **characterized in that** the wall leadthrough is provided with a sealing material (12) between the clip ring (3), support (1) and body wall (6).

6. Wall leadthrough according to Claim 5, **characterized in that** the sealing material constitutes a bead of sealing foam (12) .

7. Wall leadthrough according to one of Claims 1-6, **characterized in that** the support (1) consists of glass-fibre-reinforced material.

8. Wall leadthrough according to one of Claims 1-7, **characterized in that** the clip ring (3) consists of polyethylene.

9. Wall leadthrough according to one of Claims 1-8, **characterized in that** the inside of the support (1) is of frustoconical design and the tapering is directed towards the expansion bellows.

## Revendications

1. Traversée de paroi pour des corps en forme de toron tels des câbles, lignes, conduits, ou similaires, se composant d'un support (1) pouvant être inséré dans l'ouverture de paroi avec une ouverture de traversée pour des corps en forme de toron, où le support (1) est en forme d'anneau de cercle et peut être posé avec une bride (5) contre un côté d'une paroi de carrosserie (6), et où l'on peut faire passer un élément de traversée (4) en forme de manchon posé coaxialement contre la bride (5) à travers l'ouverture de paroi de la paroi de carrosserie (6), et où la collerette (7) du côté frontal d'un soufflet en accordéon (2) élastique est insérée dans un évidemment d'une rainure (8) formée du côté frontal sur l'élément de traversée (4), **caractérisée en ce que** le support (1) développé de manière rigide ainsi que le soufflet en accordéon (2) sont reliés ensemble à l'aide d'une bague clips (3) orthogonale en profil transversal, moyennant quoi la bague clips (3) est glissée par-dessus l'élément de traversée (4) en forme de manchon et est fixée par conjugaison de formes, et entoure d'un autre côté la collerette (7) placée sur l'élément de traversée du soufflet en accordéon avec un élément de patte (10), et moyennant quoi l'évidemment est formé par une rainure (8) formée du côté frontal sur l'élément de traversée (4).

2. Traversée de paroi selon la revendication 1, **caractérisée en ce qu'**un taquet (14) disposé sur le côté intérieur de la bague clips (3) est en prise dans une rainure extérieure (9) de l'élément de traversée (4).

3. Traversée de paroi selon l'une quelconque des revendications 1 ou 2, **caractérisée en ce que** qu'un bord semblable à une dent de scie (11) sur l'élément de patte (10) de la bague clips (3) est en prise par conjugaison de formes avec la collerette (7) du souf flet en accordéon (2).

4. Traversée de paroi selon l'une quelconque des revendications 1 à 3, **caractérisée en ce que** la collerette (7) du soufflet en accordéon (2) est insérée par conjugaison de formes dans la rainure (8) de l'élément de traversée (4).

5. Traversée de paroi selon l'une quelconque des revendications 1 à 4, **caractérisée en ce que** la traversée de paroi est pourvue d'un matériau de colmatage (12) entre la bague clips (3), le support (1), et la paroi de carrosserie (6).

6. Traversée de paroi selon la revendication 5, **caractérisée en ce que** le matériau de colmatage se présente sous la forme d'un bourrelet de mousse d'étanchéité (12).

7. Traversée de paroi selon l'une quelconque des revendications 1 à 6, **caractérisée en ce que** le support (1) se compose d'un matériau renforcé par des fibres de verre.

8. Traversée de paroi selon l'une quelconque des revendications 1 à 7, **caractérisée en ce que** la bague clips (3) est en polyéthylène.

9. Traversée de paroi selon l'une quelconque des revendications 1 à 8, **caractérisée en ce que** le côté intérieur du support (1) est configuré en forme de tronc de cône et **en ce que** la conicité est dirigée vers le soufflet en accordéon.
